# EUROPÄISCHE PATENTANMELDUNG

(11) **EP 1 746 002 A1**
(43) Veröffentlichungstag der Anmeldung: **24.01.2007**
(21) Anmeldenummer: 06013681.9
(22) Anmeldetag: 01.07.2006
(51) Int. Cl.: B60T 17/08, F16D 65/14

(54) **Federspeicher-Bremszylinder**

(30) Priorität: 20.07.2005 DE 102005033848
(71) Anmelder: WABCO GmbH, 30453 Hannover (DE)
(72) Erfinder: Brandt, Oliver, 38120 Braunschweig (DE); Ewald, Jürgen, 30880 Laatzen (DE); Matthias, Wilfried, 31542 Bad Nenndorf (DE); Richter, Andreas, 30900 Wedemark (DE); Schrader, Frank, 30938 Burgwedel (DE)
(74) Vertreter: Schrödter, Manfred

(57) **Zusammenfassung**

Die Erfindung betrifft einen FederspeicherBremszylinder mit einem Gehäuse mit einem ersten Gehäuseteil, in dem eine Federkammer mit einer einen Federspeicherkolben beaufschlagenden Speicherfeder ausgebildet ist, und mit einem zweiten Gehäuseteil, in dem ein Druckraum gebildet ist, wobei die Gehäuseteile nach außen zeigende Randflansche aufweisen, die miteinander verbindbar sind. Der zweite den Druckraum (14) aufweisende Gehäuseteil (12) besteht aus einem verformbaren Plattenmaterial und weist einen ausreichend bemessenen Randflansch (20) auf, der um den Randflansch (18) des ersten Gehäuseteils (4) herumgebördelt ist unter Überschreitung seiner Elastizitätsgrenze.

## Beschreibung

Die Erfindung betrifft einen Federspeicher-Bremszylinder gemäß Oberbegriff des Anspruchs 1.

Federspeicher-Bremszylinder der hier betrachteten Art weisen wie bekannt eine in einem ersten Gehäuseteil ausgebildete Federkammer, in der eine Speicherfeder angeordnet ist, die einen Federspeicherkolben beaufschlagt, und einen in einem zweiten Gehäuseteil ausgebildeten Druckraum auf. Zwischen Druckraum und Federkammer kann eine in Wirkverbindung mit dem Federspeicherkolben stehende Membran zwischen beiden Gehäuseteilen eingespannt sein. Solche Federspeicher-Bremszylinder dienen zur Betätigung einer Feststellbremse. Bei druckbeaufschlagtem Druckraum wird die Speicherfeder komprimiert und stellt in diesem Zustand eine erhebliche potentielle Energie dar. Im Falle eines Druckverlustes im Bremssystem verschiebt die Speicherfeder den Federspeicherkolben, wodurch die Bremse des Fahrzeugs über eine Druckstange betätigt wird. Um die durch die komprimierte Speicherfeder aufgebaute potentielle Energie nicht unkontrolliert entweichen zu lassen, wobei die Gefahr besteht, dass infolge der hohen Federkraft bzw. des Systemdrucks der Bremsanlage das Gehäuseteil praktisch weggesprengt wird, was eine erhebliche Gefahr für Personen und umgebende Gegenstände darstellt, ist insbesondere Wert zu legen auf eine manipulationssichere Verbindung beider Gehäuseteile. Eine solche Verbindung muss auch mögliche durch Manipulationen verursachte Undichtigkeiten verhindern, die ungewollte Bremsvorgänge auslösen könnten.

Aus der US 5,067,391 ist ein Federspeicherbremszylinder bekannt, bei dem ein die Speicherfeder aufnehmendes erstes Gehäuseteil aus Stahlblech besteht und durch Tiefziehen hergestellt ist. Das anschließende, den Druckraum aufnehmende zweite Gehäuseteil besteht aus einem Metallguss, in der Regel Aluminiumguß. Beide Gehäuseteile weisen angeformte nach außen ragende Randflansche auf, zwischen denen eine Membran eingespannt ist. Der Randflansch des ersten Gehäuseteils aus Stahlblech ist um den Randflansch des zweiten Gehäuseteils aus Metallguss herumgebördelt. Gemäß eines weiteren Vorschlags ist aus dieser Druckschrift bekannt, die Randflansche beider Gehäuseteile mittels eines Klemmrings zu verbinden. In beiden Fällen wird das die Klemmwirkung erzeugende Mittel über die Elastizitätsgrenze hinaus deformiert. Die Verwendung eines Metallgusses erhöht die Herstellungskosten, da hierfür geeignete teure Gussformen hergestellt werden müssen.

Aus der DE 3 404 014 A1 ist ein kombinierter Einkammer-Membran-Bremszylinder und Federspeicher-Bremszylinder bekannt, bei dem zwei eine Membran einspannende Gehäuseteile mittels eines im Schnitt U-förmigen Klemmrings, dessen Schenkel Randflansche der beide Gehäuseteile übergreifen, miteinander verbunden sind. Der Klemmring stellt ein zusätzliches Bauteil dar und erhöht die Kosten und den Montageaufwand.

Die DE 3 026 596 A1 offenbart einen Membranzylinder, welcher aus einem Deckel und einem Zylinderkörper besteht. Der Deckel und der Zylinderkörper werden durch eine Schnappverbindung miteinander verbunden derart, dass am Deckel ein geschlitzter Schnappring axial sich erstreckend ausgebildet ist. Dieser Schnappring ist geschlitzt, wodurch eine Vielzahl von Haken bestehen. Diese Haken übergreifen mit ihren Fortsetzen einen am Zylinderkörper ausgebildeten am Außenumfang desselben sich erstreckenden Bund. Zusätzlich ist ein an sich bekanntes Spannband am Außenumfang des Schnapprings angeordnet und kann in beliebiger Weise angezogen werden, um die Membran zwischen Deckel und Zylinderkörper zu verspannen. Bei einer anderen Ausführungsform einer Membraneinspannung ist am Außenumfang des Bundes ein Gewinde vorgesehen, auf welches ein Schraubband aufgeschraubt wird. Das Schraubband trägt ein entsprechendes Innengewinde. Bei dieser Verbindung werden zwei zusätzliche Bauteile benötigt, wodurch die Herstellungskosten und der Montageaufwand erhöht sind.

Die aus den beiden letzten Druckschriften bekannten Verbindungsarten der beiden Gehäuseteile sind nicht manipulationssicher, d. h. nicht gegen unerlaubte Eingriffe gesichert, so dass die Gefahr besteht, dass durch relativ einfache Manipulationen die Verbindung gelöst werden kann mit der Gefahr, dass der Deckel infolge der sich plötzlich ausdehnenden Druckfeder bzw. des Systemdrucks weggesprengt wird und Personen gefährdet werden können.

Die Aufgabe der vorliegenden Erfindung besteht darin, manipulationssichere, montagefreundliche und kostengünstige Verbindungsmittel zweier einfach und preiswert herstellbarer Gehäuseteile eines Federspeicher-Bremszylinders anzugeben.

Diese Aufgabe wird durch die Erfindung nach den Ansprüchen 1, 2 und 5 gelöst.

Vorteilhafte und zweckmäßige Weiterbildungen der Aufgabenlösung sind in den Unteransprüchen angegeben.

Eine erfindungsgemäße Lösung schlägt vor, das üblicherweise aus Metallguss bestehende Gehäuseteil, das die Druckkammer aufnimmt, aus einem verformbaren Plattenmaterial, bspw. durch Tiefziehen herzustellen und den Randflansch dieses Gehäuseteils um den Randflansch des Gehäuseteils, das die Federkammer mit Speicherfeder aufnimmt, herumzubördeln unter Deformierung des herumgebördelten Randflansches über die Elastizitätsgrenze hinaus. Die erfindungsgemäße Lösung hat zum einen den Vorteil, dass das relativ aufwendige und teuer herzustellende Metallguss-Gehäuseteil durch ein Gehäuseteil aus Stahlblech ersetzt wird, das einfach durch Tiefziehen hergestellt wird und leicht an unterschiedliche Größenverhältnisse angepasst werden kann. Der weitere Vorteil besteht darin, dass der Randflansch des die Druckkammer aufnehmenden Gehäuseteils um den Randflansch des die Speicherfeder aufnehmenden Gehäuseteils herumgebördelt werden kann, was vorteilhaft ist unter Beachtung der Montagefolge eines Federspeicher-Bremszylinders der betrachteten Art.

Eine andere erfindungsgemäße Lösung sieht vor, den Randflansch eines Gehäuseteils mit einem Außengewinde zu versehen, wobei zur Verbindung der Randflansche beider Gehäuseteile ein dem Außengewinde zugeordnetes Innengewinde aufweisender Klemmring vorgesehen ist, der einen zylindrischen Teil, an dem das Innengewinde ausgebildet ist, und eine am zylindrischen Teil angeformte, ringförmige Abwinklung aufweist und der auf den Randflansch des Gehäuseteils aufschraubbar ist, wobei die Abwinklung den Randflansch des anderen Gehäuseteils übergreift und gegen den mit dem Außengewinde versehenen Randflansch des Gehäuseteils zieht.

Eine weitere erfindungsgemäße Lösung schlägt vor, den Randflansch eines Gehäuseteils mit einer Umfangsnut zu versehen, in die mehrere Einrastelemente, die am Randflansch des anderen Gehäuseteils ausgebildet sind, beim Aufschieben des Randflansches des einen Gehäuseteils auf den Randflansch des anderen Gehäuseteils einrasten. Die Einrastelemente werden durch in der Abwinklung durch U-Schnitte hergestellte Zungen gebildet, deren freie Enden einwärts leicht ausgestellt sind.

Die Erfindung soll nachfolgend anhand der beigefügten Zeichnung, in der Ausführungsbeispiele dargestellt sind, näher erläutert werden.

Es zeigt
- Fig. 1: einen Schnitt durch eine erste Ausführungsform einer Verbindung zweier Gehäuseteile eines Federspeicher-Bremszylinders,
- Fig. 2: ein Detail "A" aus Fig. 1 in vergrößerter Darstellung,
- Fig. 3: einen Schnitt durch eine zweite Ausführungsform einer Verbindung zweier Gehäuseteile eines Federspeicher-Bremszylinders,
- Fig. 4: ein Detail "B" aus Fig. 3 in vergrößerter Darstellung,
- Fig. 5: einen Schnitt durch eine dritte Ausführungsform einer Verbindung zweier Gehäuseteile eines Federspeicher-Bremszylinders,
- Fig. 6: eine Seitenansicht der Ausführungsform nach Fi. 5 und
- Fig. 7: ein Detail "C" aus Fig. 5 in vergrößerter Darstellung und
- Fig. 8: eine Seitenansicht einer vierten Ausführungsform einer Verbindung zweier Gehäuseteile eines Federspeicher-Bremszylinders,
- Fig. 9: ein Detail aus Fig. 8 in vergrößerter Schnittdarstellung.

Gleiche und einander entsprechende Bauteile in den Figuren der Zeichnung sind mit den gleichen Bezugszeichen versehen.

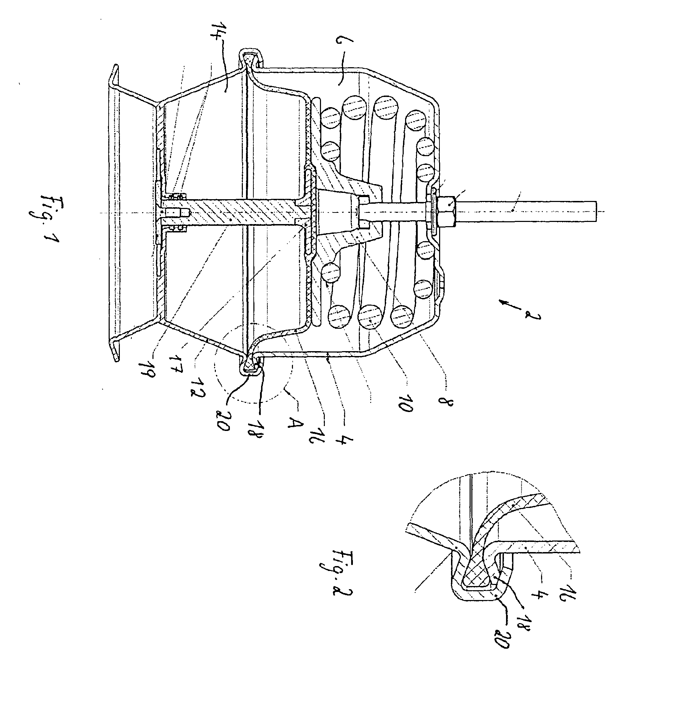

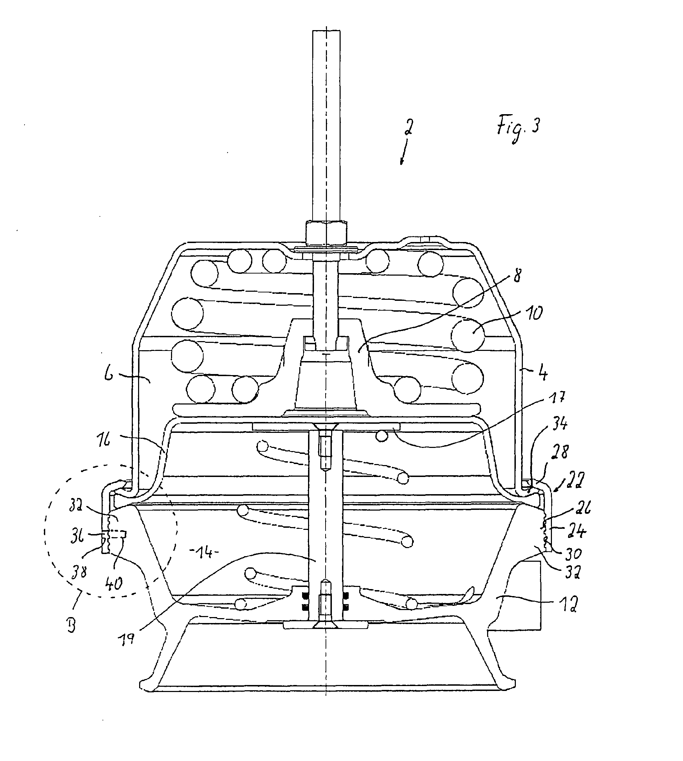

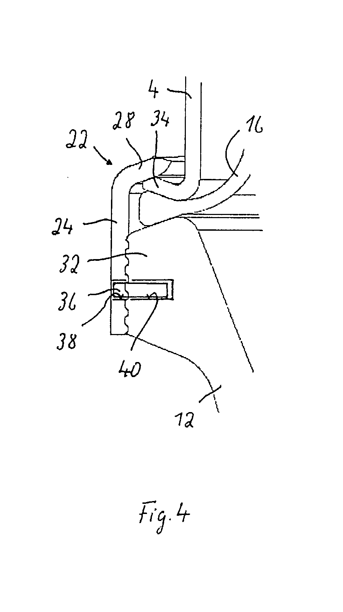

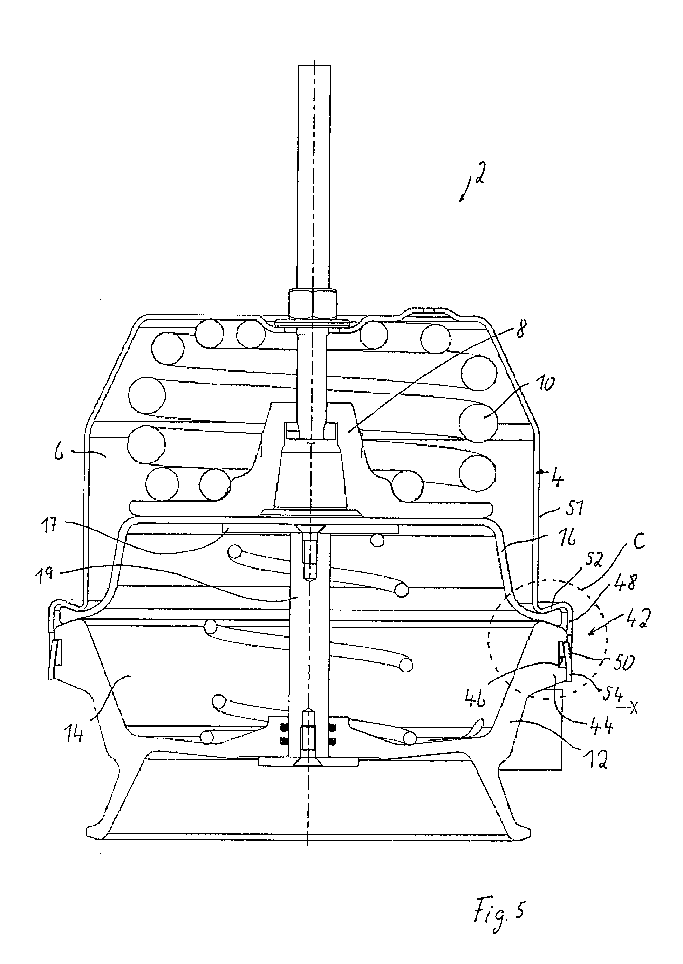

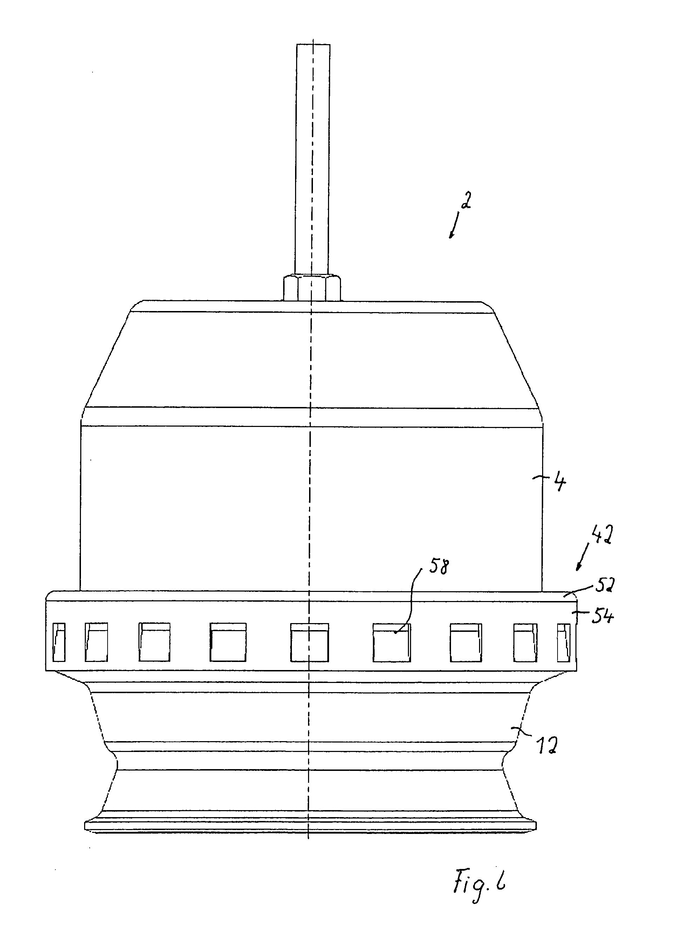

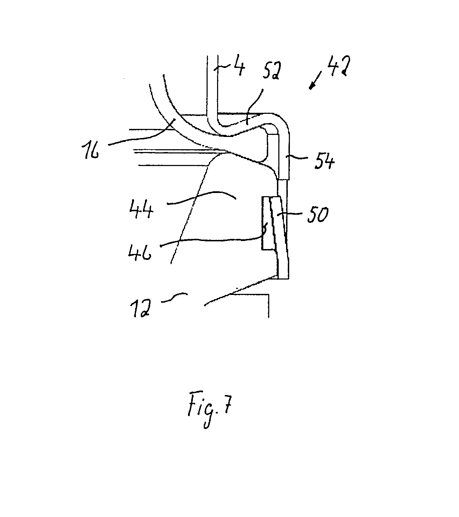

Die Zeichnung zeigt in den Figuren 1 und 2 einen Federspeicher-Druckluftbremszylinder 2 mit einem ersten Gehäuseteil 4, in dem eine Federspeicherkammer 6 mit einer einen Federspeicherkolben 8 beaufschlagenden Speicherfeder 10 ausgebildet ist, und einem zweiten Gehäuseteil 12, in dem ein Druckraum 14 gebildet ist, und einer zwischen beiden Gehäuseteilen eingespannten Federspeichermembran 16. Im Druckraum ist eine ein Druckstück 17 aufweisende Druckstange 19 verschiebbar geführt. Beide Gehäuseteile 4 und 12 bestehen aus Stahlblech und sind durch Tiefziehverfahren hergestellt.

Beide Gehäuseteile 4, 12 weisen nach außen zeigende umlaufende Randflansche 18, 20 auf, zwischen denen die Membran 16 eingespannt ist. Um eine manipulationssichere Verbindung zwischen beiden Gehäuseteilen 4, 12 herzustellen oder um eine gegen unerlaubte Eingriffe gesicherte Verbindung der beiden Gehäuseteile miteinander zu realisieren, wird der Randflansch 20 des zweiten Gehäuseteils 12 in der Zeichnung nach oben um den Randflansch 18 des ersten Gehäuseteils 4 herumgebördelt unter Deformierung des Bördelflansches über die Elastizitätsgrenze hinaus.

Die Fig. 3 und 4 zeigen eine Ausführungsform des Federspeicher-Bremszylinders 2, bei der das erste Gehäuseteil 4 und das zweite Gehäuseteil 12 mit Hilfe eines Klemmrings 22, bestehend aus einem zylindrischen Teil 24, das mit einem Innengewinde 26 ausgestattet ist und an dem eine einwärts ragende ringförmige Abwinklung 28 angeformt ist, verbunden sind. Der Klemmring 22 wird mit seinem Innengewinde 26 auf ein Außengewinde 30 eines Randflansches 32 des einen Gehäuseteils, hier des zweiten Gehäuseteils 12, nach Art einer Überwurfmutter aufgeschraubt, wobei die Abwinklung 28 einen Randflansch 34 des anderen Gehäuseteils, hier des ersten Gehäuseteils 4 übergreift.

Zur Sicherung gegen unerlaubtes Öffnen ist wenigstens ein Stift 36 vorgesehen, der durch eine im zylindrischen Teil 24 des Klemmrings 22 ausgebildete Öffnung 38 in ein Sackloch 40 des Randflansches 32 des Gehäuseteils 12 einführbar ist und außen zumindest bündig mit der Außenfläche des Klemmringes 22 abschließt.

Eine andere Möglichkeit der manipulationssicheren Ausführung besteht darin, ein Freilaufende vorzusehen, dass sich an das Innengewinde 26 anschließt.

Die Fig. 5, 6 und 7 zeigen eine Ausführungsform einer manipulationssicheren Verbindung der beiden Gehäuseteile 4, 12, bei der ein Klemmsystem 42 verwendet wird, das eine Art Nut/Feder-Verbindung darstellt und eine auf einem Randflansch 44 des einen Gehäuseteils, hier des zweiten Gehäuseteils 12, ausgebildete Umfangsnut 46 und wenigstens ein der Umfangsnut 46 zugeordnetes im Randflansch 48 des anderen Gehäuseteils, hier des ersten Gehäuseteils 4, ausgebildetes Einrastelement 50 aufweist.

Der Randflansch 48 des ersten Gehäuseteils 4 ist zum Überschieben über den Randflansch 44 des zweiten Gehäuseteils 12 winklig ausgebildet und besteht aus einem vom Gehäusemantel 51 wegragenden ringförmigen Teil 52 und einer vom Teil 52 weg in Richtung des anderen Gehäuseteils (12) zeigenden ringförmigen Abwinklung 54, die im montierten Zustand den Randflansch 44 des zweiten Gehäuseteils 12 übergreift. Der Randflansch 44 des zweiten Gehäuseteils 12 weist an dem entgegen der Aufschubrichtung zeigenden Rand eine Fase 56 auf, durch die das Auf- bzw. Überschieben der Abwinklung 54 des Randflansches 46 des ersten Gehäuseteils 4 auf den Randflansch 44 des zweiten Gehäuseteils 12 erleichtert wird.

Die Einrastelemente 50 sind vorzugsweise durch einen U-Schnitt hergestellte Zungen 58, deren freie Enden einwärts leicht ausgestellt sind. Zur Verbindung beider Gehäuseteile 4, 12 wird das erste Gehäuseteil 4 mit dem Randflansch 48 bzw. mit dessen Abwinklung 54 über den Randflansch 44 des zweiten Gehäuseteils 12 geschoben, wobei die Abwinklung 54 des Randflansches 48 über die Fase 56 des Randflansches 44 gleitet und mit seinen Zungen 58 in die Nut 46 manipulationssicher einrastet, wobei gleichzeitig die Membran 16 mit eingespannt wird.

Die beschriebenen Ausführungsbeispiele betreffen zwar Federspeicher-Bremszylinder mit Membran; die beschriebenen Verbindungsmittel der beiden Gehäuseteile gelten gleichermaßen aber auch für Federspeicher-Bremszylinder ohne Membran.

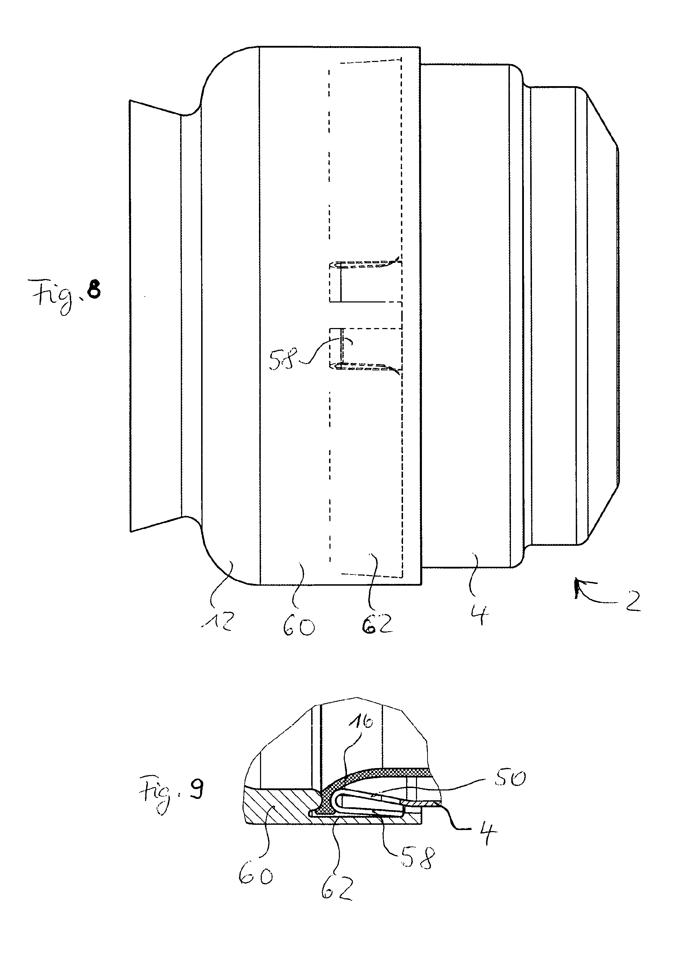

Die Figuren 8 und 9 zeigen eine Ausführungsform des anhand der Figuren 5, 6 und 7 erläuterten Klemmsystems 42, bei dem das Einrastelement 50 sowie eine Umfangsnut 62 verdeckt angeordnet sind. In der dargestellten Ausführungsform ist ein das erste Gehäuseteil 4 übergreifender Teil 60 des zweiten Gehäuseteils mit einer innenliegenden Umfangsnut 62, auch als Einstich bezeichnet, versehen. An dem ersten Gehäuseteil 4 sind über den Umfang verteilt Einrastelemente 50 angeordnet, die nach Außen gerichtete zum Einrasten in die Umfangsnut 62 vorgesehene Zungen 58 aufweisen. Wie aus der Figur 9 ersichtlich, kann das Einrastelement 50 vorteilhaft in einer Art Hakenform ausgebildet sein.

Zur Montage des Federspeicher-Druckluftzylinders 2 wird das erste Gehäuseteil 4 in das zweite Gehäuseteil 12 gesteckt, bis die Einrastelemente 50 einrasten und eine gegen unbeabsichtigtes Öffnen gesicherte Bremszylindervorrichtung schaffen. Durch entsprechende Formgebung des Teils 60 des ersten Gehäuseteils 12 sowie der Einrastelemente 58 wird bei der Montage der beiden Gehäuseteile zugleich die Membran 16 in der aus der Figur 9 ersichtlichen Weise fixiert.

Die beschriebenen Arten der manipulationssicheren Verbindung der Gehäuseteile eines Federspeicher-Bremszylinders ist für alle Arten von Federspeicher-Bremszylindern geeignet, insbesondere für Membranzylinder als auch für Kolbenzylinder (piston type cylinders).

## Patentansprüche

1. Federspeicher-Bremszylinder mit einem Gehäuse mit einem ersten Gehäuseteil, in dem eine Federkammer mit einer einen Federspeicherkolben beaufschlagenden Speicherfeder ausgebildet ist, und mit einem zweiten Gehäuseteil, in dem ein Druckraum gebildet ist, wobei die Gehäuseteile nach außen zeigende miteinander verbindbare Randflansche aufweisen, **dadurch gekennzeichnet, dass** der zweite den Druckraum (14) aufweisende Gehäuseteil (12) aus einem verformbaren Plattenmaterial besteht und einen ausreichend bemessenen Randflansch (20) aufweist, der um den Randflansch (18) des ersten Gehäuseteils (4) unter Überschreitung seiner Elastizitätsgrenze herumgeformt ist.

2. Federspeicher-Bremszylinder mit einem Gehäuse mit einem ersten Gehäuseteil, in dem eine Federkammer mit einer einen Federspeicherkolben beaufschlagenden Speicherfeder ausgebildet ist, und mit einem zweiten Gehäuseteil, in dem ein Druckraum gebildet ist, wobei die Gehäuseteile nach außen zeigende miteinander verbindbare Randflansche aufweisen, **dadurch gekennzeichnet, dass** der Randflansch (32) eines Gehäuseteils (12) ein Außengewinde (30) aufweist, wobei zur Verbindung der Randflansche (32, 34) beider Gehäuseteile (4, 12) ein dem Außengewinde (30) zugeordnetes Innengewinde (26) aufweisender Klemmring (22) vorgesehen ist, der einen zylindrischen Teil (24), an dem das Innengewinde (26) ausgebildet ist, und eine am zylindrischen Teil angeformte, einwärts ragende ringförmige Abwinklung (28) aufweist, und der auf den Randflansch (32) des Gehäuseteils (12) aufschraubbar ist, wobei die Abwinklung (28) den Randflansch (34) des anderen Gehäuseteils (4) übergreift und gegen den mit dem Außengewinde (30) versehenen Randflansch (32) des Gehäuseteils (12) zieht.

3. Federspeicher-Bremszylinder nach Anspruch 2, **dadurch gekennzeichnet, dass** zur Sicherung des montierten Klemmrings (22) wenigstens ein Stift (36) vorgesehen ist, der durch eine im zylindrischen Teil (24) des Klemmrings (22) ausgebildete Öffnung (38) in ein Sackloch (40) des Randflansches (32) des den Druckraum (14) aufnehmenden Gehäuseteils (12) einführbar ist, derart, dass der Stift (36) zumindest außen bündig mit der Außenfläche des zylindrischen Teils (24) abschließt.

4. Federspeicher-Bremszylinder nach Anspruch 2, **dadurch gekennzeichnet, dass** zur Sicherung des Klemmrings (22) im montierten Zustand ein Freilaufende vorgesehen ist, das sich an das Innengewinde (26) anschließt.

5. Federspeicher-Bremszylinder mit einem Gehäuse mit einem ersten Gehäuseteil, in dem eine Federkammer mit einer einen Federspeicherkolben beaufschlagenden Speicherfeder ausgebildet ist, und mit einem zweiten Gehäuseteil, in dem ein Druckraum gebildet ist, wobei die Gehäuseteile nach außen zeigende miteinander verbindbare Randflansche aufweisen, **dadurch gekennzeichnet, dass** der Randflansch (44) eines Gehäuseteils (12) eine Umfangsnut (46) aufweist, in die mehrere Einrastelemente (50), die am Randflansch (48) des anderen Gehäuseteils 84) ausgebildet sind, beim Aufschieben des Randflansches (48) des einen Gehäuseteils (4) auf den Randflansch (44) des anderen Gehäuseteils (12) einrasten.

6. Federspeicher-Bremszylinder nach Anspruch 5, **dadurch gekennzeichnet, dass** der Randflansch (48) des einen Gehäuseteils (4) zum Überschieben über den Randflansch (44) des anderen Gehäuseteils (12) winklig ausgebildet ist und aus einem vom Gehäusemantel (51) wegragenden ringförmigen Teil (52) und einer vom ringförmigen Teil (52) weg in Richtung des anderen Gehäuseteils (12) zeigenden ringförmigen Abwinklung (54) besteht.

7. Federspeicher-Bremszylinder nach Anspruch 5 oder 6, **dadurch gekennzeichnet, dass** die Einrastelemente (50) in der Abwinklung (54) durch U-Schnitte hergestellte Zungen sind, deren freie Enden einwärts leicht ausgestellt sind.

8. Federspeicher-Bremszylinder nach Anspruch 5, 6 oder 7, **dadurch gekennzeichnet, dass** der mit der Umfangsnut (46) ausgestattete Randflansch (44) des Gehäuseteils (12) an dem entgegen der Aufschubrichtung des anderen Gehäuseteils (4) zeigenden Rand eine Fase (52) aufweist.

9. Federspeicher-Bremszylinder nach einem der vorhergehenden Ansprüche, **dadurch gekennzeichnet, dass** der Federspeicher-Bremszylinder mit einer in Wirkverbindung mit dem Federspeicherkolben stehenden umfangsmäßig zwischen den Randflanschen der beiden Gehäuseteile eingespannten Membran versehen ist.

10. Federspeicher-Bremszylinder nach Anspruch 2, **dadurch gekennzeichnet, dass** das Herumformen des Randflansches (20) um den Randflansch (18) durch Bördeln, Verkralen oder Andrücken erfolgt.
